# EUROPÄISCHE PATENTSCHRIFT

(11) **EP 2 634 462 B1**
(45) Veröffentlichungstag und Bekanntmachung des Hinweises auf die Patenterteilung: **04.04.2018**
(21) Anmeldenummer: 13000805.5
(22) Anmeldetag: 16.02.2013
(51) Int. Cl.: F16K 1/44, F16K 51/00

(54) **Verfahren zur Reinigung eines Ventils**
Method for cleaning a valve
Procédé destiné au nettoyage d'une soupape

(30) Priorität: 28.02.2012 DE 102012003892
(43) Veröffentlichungstag der Anmeldung: 04.09.2013
(73) Patentinhaber: GEA Tuchenhagen GmbH, 21514 Büchen (DE)
(72) Erfinder: Ladenburger, Anton, 73485 Zipplingen (DE)
(74) Vertreter: Hauck Patentanwaltspartnerschaft mbB

(56) Entgegenhaltungen:
- WO-A1-92/21900
- DE-A1- 19 652 215
- DE-C2- 3 835 944
- DE-U1-202008 003 976

## Beschreibung

### TECHNISCHES GEBIET

Die Erfindung betrifft ein Verfahren zur Reinigung eines Ventils, wobei im Verlauf eines Reinigungsvorganges wenigstens eine mit dem Ventil fluidgängig verbundene Prozessleitung mit Reinigungsflüssigkeit durchströmt ist, wobei während des Reinigungsvorganges wenigstens ein Teil einer Ventilstange, der in einer Schließstellung eines mit der Ventilstange verbundenen Schließgliedes mit einer Ventilstangendichtung in dichtendem Kontakt steht, als ventilstangendichtungsnaher Bereich aus dieser Schließstellung heraus um einen Teilhub einwärts in den Innenraum eines Ventilgehäuseteils verschoben ist und das zugeordnete Schließglied in eine Zwischenstellung bringt, in der die Abdichtung des Schließgliedes in seinem Ventilsitz erhalten bleibt.

Das Ventil, insbesondere ein Doppelsitzventil, auf das das erfindungsgemäße Verfahren Anwendung findet, weist den zwischen Prozessleitungen, die über das Ventil fluidgängig miteinander verbunden sind, angeordneten Ventilsitz auf. Es besitzt weiterhin das wenigstens eine Schließglied, wobei zumindest das wenigstens eine Schließglied schieberartig ausgebildet ist und mit dem Ventilsitz radial dichtend zusammenwirkt. Das wenigstens eine Schließglied ist mit der zugeordneten Ventilstange, die es betätigt, fest verbunden, und die Ventilstange ist über die Ventilstangendichtung aus dem Ventilgehäuseteil des Ventils verschieblich abgedichtet herausgeführt.

### STAND DER TECHNIK

In der Prozesstechnik im Bereich der Nahrungsmittel- und Getränkeindustrie im weitesten Sinne sowie in der Pharmazie, Biotechnologie und andere prozesstechnischen Anlagen ist die regelmäßige Reinigung der Prozessanlage unverzichtbar, um die Betriebssicherheit zu gewährleisten und die hygienischen Anforderungen zu erfüllen. In Prozessanlagen der vorgenannten Industriebereiche, insbesondere in der Molkerei- und Brauereiindustrie, wird dies dadurch erreicht, dass beispielsweise eine Prozessleitung einem Reinigungsvorgang unterzogen wird, indem wenigstens eine Reinigungsflüssigkeit diese Prozessleitung durchströmt (sog. CIP-Reinigung: cleaning in place) und dadurch alle in dieser sich befindenden weiteren Prozesskomponenten im Durchfluss mitgereinigt werden.

Auf diesem Wege werden auch Ventile in dieser Prozessleitung einer Gehäusereinigung unterzogen, wobei das entsprechende Ventilgehäuseteil, eine Seite des Schließglieds, die den Innenraum dieses Ventilgehäuseteils berandet, und ggf. die das Schließglied betätigende Ventilstange gereinigt werden, wenn letztere in das Ventilgehäuseteil eingreift. Bei Bedarf wird das Ventil während des Reinigungsvorgangs in seine volle Offenstellung oder auch in eine Teiloffenstellung gebracht, um den Ventilsitz zu reinigen (sog. Sitzreinigung) und um ggf. Reinigungsflüssigkeit in die angrenzende Prozessleitung zu befördern.

In einem Doppelsitzventil, bei dem die beiden Prozessleitungen durch zwei in Reihe geschaltete Schließglieder voneinander getrennt sind, die zwischen sich einen Leckagehohlraum einschließen, der über wenigstens einen Verbindungsweg mit der Umgebung des Doppelsitzventils verbunden ist, kann die Sitzreinigung dadurch erreicht werden, dass das eine Schließglied in eine Teiloffenstellung, die sog. Sitzreinigungsstellung, gebracht wird, in der das Schließglied spaltweit von seinem zugeordneten Ventilsitz angehoben ist, während das andere Schließglied in seiner Schließstellung verbleibt. Dies ist in der Fachwelt gut bekannt unter der Bezeichnung "Liften". Sitzreinigung durch Liften ermöglicht die Beaufschlagung des in seiner Schließstellung verbleibenden Schließgliedes mit Produkt, während am anderen Schließglied eine Sitz- in Verbindung mit einer Gehäusereinigung durchgeführt wird. Diese Funktionen der Doppelsitzventile und die Durchführung von Verfahrensschritten zur Sicherstellung dieser Funktionen sind dem Fachmann hinlänglich bekannt.

Die Qualität der Ventilreinigung ist zum großen Teil durch die Ausbildung der Strömung der Reinigungsflüssigkeit im Ventilgehäuse vorgegeben. In der Auslegung solcher Ventile ist daher darauf zu achten, dass die Strömungsverhältnisse (u.a. Turbulenz, Verwirbelung) möglichst eine vollständige Innenreinigung des Ventils erbringen, wozu das ganze Ventilgehäuse einschließlich ggf. vorliegender Toträume oder abgelegener Bereiche, das Schließglied, der mit Produkt beaufschlagte Ventilstangenbereich und ggf. der Ventilsitz, die Sitzdichtung und der Leckagehohlraum gehören können. Besonders problematisch kann die Reinigung der Toträume und der abgelegenen Bereiche, Spalten und Engpässe im Ventilgehäuse sein, in denen eine hinreichende Strömungsgeschwindigkeit des Reinigungsmittels schwer oder gar nicht zu erreichen ist.

Aus der DE10 2007 050 086A1 ist ein Verfahren zum Optimieren des Betriebs eines Ventils bekannt. Das Ventil wird zur Durchführung des Verfahrens im Verlauf einer Reinigung mit Reinigungsflüssigkeit durchströmt. Im Hinblick auf eine bessere Reinigungswirkung in abgelegenen Bereichen des Ventilinnenraums wird bei der Reinigung das Schließglied in mindestens eine Zwischenposition zwischen seiner Schließstellung und seiner Offenstellung gebracht.

Die DE32 24 852A1 beschreibt ein Doppelsitzventil, bei dem zum Zwecke der Reinigung der Sitzflächen der Ventilteller letztere beispielsweise um einen solchen Betrag gegenläufig in eine Zwischenstellung bewegt werden, dass sie ihre der Schließstellung entsprechende Sitzfläche freigeben, ohne dabei den Ventilsitz zu verlassen, sodass die freigelegten Sitzflächen beliebig oft vom Leckagehohlraum zwischen den Ventiltellern gereinigt werden können. Die ventilstangendichtungsnahen Bereiche der Ventilstangen, die besonders reinigungskritisch sind, werden jeweils um den gleichen Betrag in die zugeordnete Durchführung bzw. Durchführungsöffnung im Ventilgehäuse hineinverschoben und entziehen sich somit in der Zwischenstellung einer wirksamen Reinigung mit der Reinigungsflüssigkeit aus der jeweils zugeordneten Prozessleitung.

Ähnlich verhält es sich bei einem weiteren bekannten Doppelsitzventil gemäß DE31 08 778C2, das in den Schließgliedkonfigurationen der dortigen Figuren 1 bis 5 ausgeführt sein kann und bei dem jeweils ein schieberartig ausgebildetes Schließglied zum Zwecke der Reinigung seiner zugeordneten Sitzfläche in eine Zwischenstellung verbracht wird, in der die Abdichtung des Schließgliedes in seiner Sitzfläche erhalten bleibt. Auch hier wird der ventilstangendichtungsnahe Bereich der Ventilstange in die zugeordnete Durchführung im Ventilgehäuse hineinverschoben und entzieht sich somit in der Zwischenstellung einer wirksamen Reinigung mit der Reinigungsflüssigkeit aus der zugeordneten Prozessleitung.

Die DE40 35 017C1 offenbart ein Verfahren zur Sitzreinigung eines Doppelsitzventils, in dem ein Schließglied periodischen, sich einander ablösenden Öffnungs- und Schließbewegungen unterzogen wird.

Es wurde festgestellt, dass es bei der Verarbeitung bestimmter Produkte, z.B. einiger Biersorten, zu Ablagerungen fester oder dickflüssiger Bestandteile oder mikrobiologischem Wuchs auf der Ventilstange kommen kann, insbesondere an Stellen, in denen die Strömungsgeschwindigkeit während der Produktion niedrig ist. Dies betrifft z.B. den Bereich unmittelbar neben der Ventilstangendichtung, wo die Ventilstange und die zugeordnete Ventilstangendichtung bzw. die Gehäusewand einen eckförmigen Engpass um die Ventilstange herum bilden. Es kann sich beispielsweise um Ablagerungen von Zucker, Würzeextrakt, Ölen oder anderen an sich schon schwer abreinigbaren Substanzen handeln. Wenn sich diese Substanzen in Form fest anhaftender Verkrustungen ausbilden, dann können sich letztere besonders abrasiv auf die Ventilstangendichtung auswirken, wenn die verkrusteten Bereiche im Zuge des planmäßigen Betriebs des Ventils in die zugeordnete Ventilstangendichtung hineingefahren werden.

Bislang wird das Problem der Reinigung der kritischen Bereiche an oder im unmittelbaren Umfeld der Ventilstangendichtung, im Folgenden als ventilstangendichtungsnaher Bereich bezeichnet, dadurch gelöst, dass die Ventilstangendichtung im Bedarfs- oder Reinigungsfall spaltweit so weit freigelegt ist, dass sie mit Reinigungsmittel aus dem benachbarten Ventilgehäuseteil beaufschlagt und gereinigt wird, wobei das Reinigungsmittel zusammen mit den abgereinigten Bestandteilen auf dem Weg über die freigelege Ventilstangendurchführung in die Umgebung des Ventils abgeführt wird.

In der DE196 52 215A1 sind ein Verfahren zum Reinigen eines leckagefrei schaltenden Absperrventils und ein Absperrventil mit schieberartig ausgebildeten Schließgliedern beschrieben. Nach dem Verfahren wird die Gehäusedichtung im Ventilgehäuseoberteil durch einen in Richtung der Betätigungseinrichtung ausgeführten Teilhub des oberen Schließgliedes freigelegt und die Gehäusedichtung sowie die Dichtung des oberen Schließgliedes und der spaltweit freigelegte zugeordnete Ventilsitz werden durch Teilströme des Reinigungsmittelstromes aus dem Ventilgehäuseoberteil beaufschlagt, die in den Leckagehohlraum eingeleitet werden. Mit einem Teilhub des unteren Schließgliedes nach unten wird dessen Dichtung freigelegt und diese Dichtung sowie der zugeordnete Ventilsitz werden von einem Teilstrom aus dem Reinigungsmittelstrom des Ventilgehäuseunterteils beaufschlagt, der über den Leckagehohlraum in die Leckageableitung frei eingeleitet wird.

Aus der DE38 35 944C2 ist ein als Doppelsitzventil ausgebildetes Absperrventil bekannt, das ein unabhängig angetriebenes, als Schieberkolben ausgebildetes erstes (unteres) Schließglied und ein abhängig angetriebenes, als Sitzteller ausgebildetes zweites (oberes) Schließglied aufweist. Eine nach unten aus dem unteren Ventilgehäuseteil herausgeführte, mit dem ersten Schließglied verbundene Ventilstange ist als sog. Druckausgleichskolben ausgeführt und bildet mit seiner zylindrischen Außenfläche und einem unteren Ringansatz des unteren Ventilgehäuseteils bei nach unten in Reinigungsstellung bewegtem ersten Schließglied einen von oben nach unten freien kreisförmigen Spalt aus, über den die zylindrische Außenfläche der Ventilstange und die zugeordnete, freigelegte Ventilstangendichtung gleichzeitig mit dem gegenüber der zugeordneten Sitzfläche spaltweit freigelegten ersten Schließglied spülbar ist. Der die vorgenannte Reinigungsstellung generierende Teilhub des ersten Schließgliedes ist gegensinnig zur Öffnungsrichtung des Absperrventils orientiert, sodass Ablagerungen an der Ventilstange im Bereich der Ventilstangendichtung im Zuge der Überführung der Ventilstange in die Reinigungsstellung zunächst in und ggf. hinter die Ventilstangendichtung transportiert werden, bevor sie abgereinigt werden können.

Ein Verfahren zur Reinigung der Ventilstange und der zugeordneten Ventilstangendichtung eines Doppelsitzventils durch Freilegen der Ventilstangendichtung und Abzweigung des zur Reinigung notwendigen Reinigungsmittels aus dem benachbarten Ventilgehäuseteil ist auch aus der WO92/21 900A1 bekannt. Das Doppelsitzventil besitzt zwei schieberartig ausgebildete Schließglieder, die jeweils radial gegenüber einem gemeinsamen zylindrischen Ventilsitz abdichten. Eine in dem Dokument beschriebene Ausführungsform (Figur 4) zeichnet sich dadurch aus, dass die Schließglieder im Zuge des Reinigungsverfahrens um gleichsinnige Teilhübe verschoben werden (siehe Figur 5), wobei die Abdichtung der beiden Schließglieder in ihrem Sitzbereich erhalten bleibt und wobei der Reinigungsmittelstrom an der Ventilstangendurchführung des unteren, abhängig angetriebenen Schließgliedes abgezweigt wird, dessen Teilhub entgegen der Öffnungsrichtung des Ventils verläuft. Der die vorgenannte Reinigungsstellung generierende Teilhub des abhängig angetriebenen, unteren Schließgliedes ist ebenfalls, wie bei dem Absperrventil nach der DE38 35 944C2, gegensinnig zur Öffnungsrichtung des Doppelsitzventils orientiert, wobei nunmehr aber der ventilstangendichtungsnahe Bereich der Ventilstange im Zuge seiner Reinigung um einen Teilhub in den Innenraum des benachbarten Ventilgehäuseteils hineingefahren wird. Dadurch werden Ablagerungen an der Ventilstange im Bereich der Ventilstangendichtung im Zuge der Überführung der Ventilstange in ihre Reinigungsstellung von der Ventilstangendichtung um diesen Teilhub in den Innenraum des Ventilgehäuses hineinverschoben, bevor sie dort abgereinigt werden.

Die vorgenannten bekannten Verfahren, bei denen die Durchführung der Ventilstange im zugeordneten Ventilgehäuseteil durch einen Teilhub der Ventilstange spaltweit freigegeben wird, besitzen eine Gemeinsamkeit, die nachteilig ist und darin besteht, dass an die spaltweite Freigabe der Durchführung der Ventilstange gleichzeitig und zwangsläufig auch eine planmäßige Reinigung wenigstens der Sitzfläche des mit dieser Ventilstange verbundenen Schließgliedes gekoppelt ist. Das bekannte Verfahren gemäß WO92/21 900A1 in der aus der dortigen Figur 4 ersichtlichen Ausgestaltung wird im Rahmen der vorliegenden Erfindung als nächstkommender Stand der Technik angesehen. Gegen diesen Stand der Technik ist das erfindungsgemäße Verfahren abgegrenzt.

Es ist Aufgabe der Erfindung, ein Verfahren zum Reinigung eines Ventils der gattungsgemäßen Art anzugeben, das die Reinigungswirkung im Ventil allgemein und im Besonderen der Ventilstange(n) insbesondere im Bereich ihrer Durchführung durch das Ventilgehäuse verbessert und demzufolge unter Anderem einen reduzierten Abrieb an der Ventilstangendichtung zwischen Ventilstange und Ventilgehäuse sowie verbesserte hygienische Bedingungen im Ventilgehäuse sicherstellt.

### ZUSAMMENFASSUNG DER ERFINDUNG

Diese Aufgabe wird durch ein Verfahren mit den Merkmalen des Anspruchs 1 gelöst. Vorteilhafte Ausgestaltungen des Verfahrens sind Gegenstand der Unteransprüche. Die Verwendung des Verfahrens gemäß der Erfindung ist Gegenstand des Anspruchs 7.

Die Erfindung geht aus von einem an sich bekannten Reinigungsverfahren bzw. Reinigungsschritt, vorgeschlagen für ein Doppelsitzventil, bei dem im Verlauf eines Reinigungsvorganges wenigstens eine mit dem Ventil fluidgängig verbundene Prozessleitung mit Reinigungsflüssigkeit durchströmt ist, wobei während des Reinigungsvorganges wenigstens ein Teil der Ventilstange, der in einer Schließstellung eines mit der Ventilstange verbundenen Schließgliedes mit einer Ventilstangendichtung in dichtendem Kontakt steht, als ventilstangendichtungsnaher Bereich aus dieser Schließstellung heraus um einen Teilhub einwärts in den Innenraum des Ventilgehäuseteils verschoben ist und das zugeordnete Schließglied in eine Zwischenstellung bringt, in der die Abdichtung des Schließgliedes in seinem Ventilsitz erhalten bleibt.

Der erfinderische Grundgedanke besteht darin, dass mindestens eine Zwischenstellung vorgesehen ist, und dass in jeder Zwischenstellung die Abdichtung der Ventilstangendichtung gegenüber der zugeordneten Ventilstange erhalten bleibt. Dadurch wird wenigstens der Teil der Ventilstange, der in der Schließstellung mit der Ventilstangendichtung in dichtendem Kontakt steht, in den zugeordneten Ventilgehäuseteil hineinverschoben. Hierdurch wird erreicht, dass der ventilstangendichtungsnahe Bereich der Ventilstange während der Reinigung in den Innenraum des Ventilgehäuseteils hineinverschoben ist, wo die Strömungsverhältnisse vorteilhafter für eine gründlichere Reinigung dieses Bereichs der Ventilstange sind.

Das erfindungsgemäße Verfahren ist durch die folgenden Verfahrensvarianten vorteilhaft ausgestattet. So kann es für den angestrebten Reinigungserfolg zweckmäßig sein, wenn die wenigstens eine Zwischenstellung über eine vorher festgelegte Zeitspanne gehalten wird. Darüber hinaus wird die Reinigung intensiviert, wenn nach einem weiteren Vorschlag mehr als eine Zwischenstellung entweder mittels jeweils gleichen oder mittels jeweils ungleichen Teilhubs vorgesehen ist, die in zeitlicher Abfolge aneinander gereiht sind (sogenanntes "Takten"). Ein anderer Vorschlag intensiviert die Reinigung dadurch, dass periodisch sich ablösende Zwischen- und Schließstellungen des Schließglieds vorgesehen sind.

Das erfindungsgemäße Verfahren lässt sich vorteilhaft auch mit einem an sich bei Doppelsitzventilen bekannten Sitzreinigungsverfahren oder mit der regulären Öffnungsbewegung eines als Einsitz- oder Doppelsitzventil ausgebildeten Ventils kombinieren. Diesbezüglich wird vorgeschlagen, dass im Zuge des Reinigungsvorganges in der Prozessleitung das erfindungsgemäße Verfahren, zeitlich gesehen, jeweils einem Sitzreinigungsverfahren (sogenanntes "Liften"), bei dem ein Schließglied um einen Lifthub spaltweit von seinem zugeordneten Ventilsitz entfernt wird, oder jeweils einer regulären Öffnungsbewegung um den vollen Öffnungshub vorgeschaltet wird. Hierdurch wird die Ventilstange in ihrem ventilstangendichtungsnahen Bereich gründlich gereinigt, und es wird verhindert, dass Verschmutzungen an der Ventilstange in die Ventilstangendichtung und den dahinter liegenden Bereich hineingezogen werden.

Das erfindungsgemäße Verfahren wird in vorteilhafter Weise auf Ventile angewandt, die zum Einen als an sich bekannte Einsitzventile ausgebildet sind und die ein schieberartig ausgebildetes Schließglied aufweisen, das mit einem Ventilsitz radial dichtend zusammenwirkt, oder die zum Anderen entweder als an sich bekannte Doppelsitzventile oder als an sich bekannte Doppeldichtventile ausgeführt sind. Die beiden relativ zueinander beweglichen Schließglieder des Doppelsitzventils können beide schieberartig ausgebildet sein und wirken radial dichtend entweder mit einem ihnen gemeinsamen zylindrischen Ventilsitz zusammen oder jedes Schließglied ist einem separaten zylindrischen Ventilsitz zugeordnet. Nach einer anderen Ausführungsform ist ein Schließglied schieberartig ausgeführt und wirkt radial dichtend mit einem zylindrischen ersten Ventilsitz zusammen, während das andere Schließglied axial oder radial/axial dichtend mit einem zugeordneten zweiten Ventilsitz zusammenwirkt. Beim Doppeldichtventil sind auf einem einzigen Schließkörper zwei axial beabstandete Dichtungen angeordnet, die in Sitzkonfigurationen ausgeführt sein können, die adäquat zu jenen des vorgenannten Doppelsitzventils sind.

Das erfindungsgemäße Verfahren wird zweckmäßig zur Reduzierung der Abnutzung bzw. des Abriebs an der Ventilstangendichtung verwendet.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausgestaltungen eines Verfahrens zur Reinigung eines Ventils realisiert ist, werden in der Zeichnung die erfindungsgemäßen Merkmale in ihrer Anwendung an einem Einsitz- und an einem Doppelsitzventil beschrieben. Es zeigen
- **Figur 1**: in schematischer Darstellung ein radial dichtendes Einsitzventil in seiner Schließstellung;
- **Figur 2**: gleichfalls in schematischer Darstellung ein Doppelsitzventil in seiner Schließstellung;
- **Figur 2a**: das Doppelsitzventil gemäß Figur 2 mit seinem oberen Schließglied in der Schließstellung und seinem unteren Schließglied in einer erfindungsgemäßen Zwischenstellung;
- **Figur 2b**: das Doppelsitzventil gemäß Figur 2 mit seinem unteren Schließglied in einer Sitzreinigungsstellung und die
- **Figuren 3a, 3b, 3c**: drei Diagramme verschiedener Betätigungswege des wenigstens einen Schließgliedes und der zugeordneten Ventilstange im Zuge der Durchführung des erfindungsgemäßen Verfahrens.

### DETAILLIERTE BESCHREIBUNG

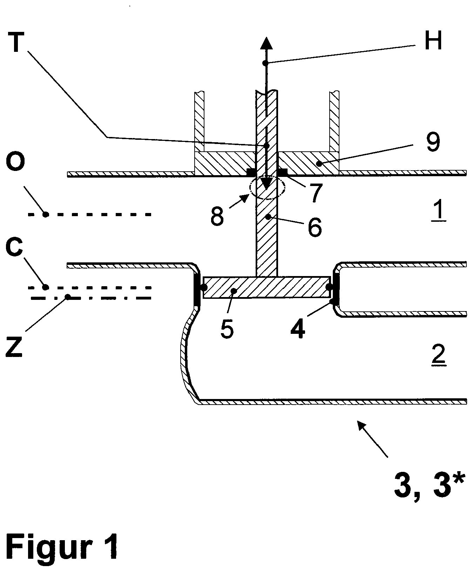

In **Figur 1** ist eine typische Verrohrungsanordnung einer Prozessanlage dargestellt, in der eine erste Prozessleitung 1 über ein als Absperrventil fungierendes Ventil 3 mit einer zweiten Prozessleitung 2 verbunden ist. Das Ventil 3 ist als sogenanntes Einsitzventil 3* ausgebildet, das, ausgehend von der dargestellten Normallage und einer Schließstellung C, ein nach oben um einen vollen Öffnungshub H in eine volle Offenstellung O öffnendes, mit einem zylindrischen Ventilsitz 4 zusammenwirkendes Schließglied 5 aufweist. Während eines Reinigungsvorgangs in der ersten Prozessleitung 1 wird ein oberer Teil eines Ventilgehäuseteils 9 des Ventils 3, 3* gereinigt, und zwar einschließlich einer fest mit dem Schließglied 5 verbundenen Ventilstange 6 und der oberen Seite des Schließgliedes 5.

Die Qualität der Reinigung des oberen Teils des Ventilgehäuseteils 9 hängt von den Strömungsbedingungen der Reinigungsflüssigkeit ab, die die erste Prozessleitung 1 und das Ventil 3, 3* durchströmt. Von besonderer Wichtigkeit ist ein in Figur 1 zeichnerisch zusätzlich hervorgehobener ventilstangendichtungsnaher Bereich 8 der Ventilstange 6 in der Nachbarschaft zu einer Ventilstangendichtung 7, die die verschiebliche Ventilstange 6 gegenüber dem oberen Teil des stationären Ventilgehäuseteils 9 abdichtet. Im normalen Produktionsbetrieb, z.B. in einer Bierbrauerei, ist dieser ventilstangendichtungsnahe Bereich 8 durch seine geometrischen Bedingungen und die daraus resultierenden niedrigen Fließgeschwindigkeiten des Produkts besonders anfällig für Ansammlungen von Produkt oder Produktbestandteilen. Bei bestimmten Produkten kann es unter solchen Bedingungen zu Ablagerungen fester oder dickflüssiger Bestandteile oder zu mikrobiologischem Bewuchs, beispielsweise in Form von abrasiven Verkrustungen, auf der Ventilstange 6 kommen. Die Reinigungsflüssigkeit unterliegt in der Regel den gleichen Fließbedingungen wie das Produkt, und die niedrige Fließgeschwindigkeit kann daher zu einem nicht ausreichenden Reinigungseffekt in gerade den Bereichen, die für die oben genannten Probleme meist anfällig sind, führen.

Eine verbesserte Reinigung erfolgt dadurch, dass während oder bevor Reinigungsflüssigkeit die erste Prozessleitung 1 durchgeströmt, die Ventilstange 6 mit ihrem ventilstangendichtungsnahen Bereich 8 aus der Schließstellung C des Schließglieds 5 heraus um einen Teilhub T einwärts in den Innenraum des oberen Teils des Ventilgehäuseteils 9 verschoben ist und das zugeordnete Schließglied 5 in eine Zwischenstellung Z bringt, in der die Abdichtung des Schließgliedes 5 in seinem Ventilsitz 4 erhalten bleibt. Erfindungsgemäß ist dabei mindestens eine Zwischenstellung Z vorgesehen, und in jeder Zwischenstellung Z bleibt die Abdichtung der Ventilstangendichtung 7 gegenüber der zugeordneten Ventilstange 6 erhalten. Die Prozessleitungen 1 und 2 sind weder in der Schließstellung C noch in der Zwischenstellung Z über das Ventil 3, 3* fluidgängig miteinander verbunden.

Durch die Beförderung des Schließgliedes 5 in die Zwischenstellung Z wird der Teil der Ventilstange 6, der sich in der regulären Schließstellung C des Ventils 3, 3* auf der Seite des Innenraums des Ventilgehäuseteils 9 unmittelbar neben der Ventilstangendichtung 7 befand, in eine Stellung in den Innenraum des Ventilgehäuseteils 9 hineinverschoben, in der eine wirkungsvollere Reinigung aufgrund der höheren Fließgeschwindigkeiten und bessere Strömungsverhältnisse der Reinigungsflüssigkeit gegeben sind.

Zweckmäßigerweise wird das erfindungsgemäße Verfahren eingesetzt, um zu verhindern, dass Unreinheiten, Anhaftungen oder Ablagerungen auf der Ventilstange 6 im Zuge eines Öffnungsvorgangs des Ventils 3, 3* in den Gleitspalt zwischen Ventilstange 6 und zugeordneter Ventilstangendichtung 7 transportiert werden und ggf. sogar hinter diese gelangen. Die wirkungsvolle Abreinigung des kritischen ventilstangendichtungsnahen Bereichs 8 der Ventilstange 6 reduziert die Abnutzung der Ventilstangendichtung 7 und damit auch den Wartungsaufwand des Ventils 3, 3* und verlängert somit die Lebensdauer der Ventilstangendichtung 7. Weiter wird in Anwendungen mit hohen hygienischen Anforderungen sichergestellt, dass Unreinheiten, Anhaftungen oder Ablagerungen der vorgenannten Art nicht zu einem späteren Zeitpunkt aus dem Bereich hinter der Ventilstangendichtung 7 zurück in die Prozessleitung 1 gelangen können (sog. "Fahrstuhleffekt").

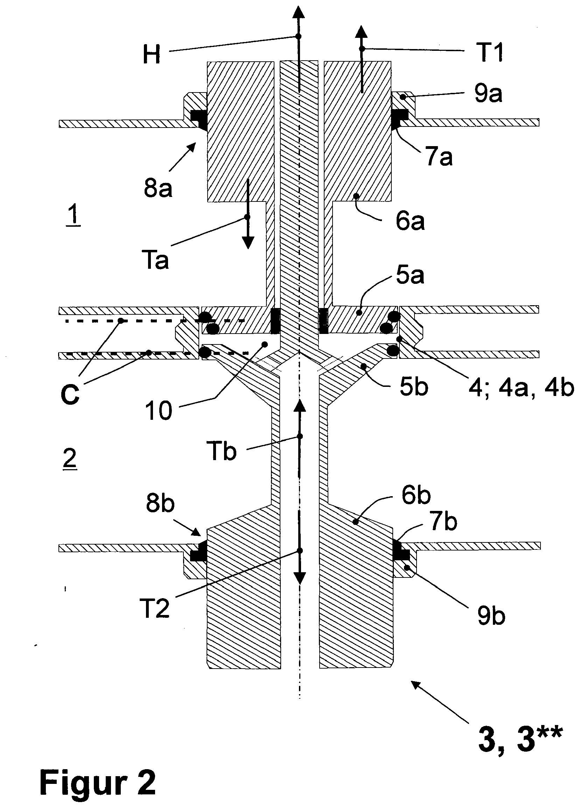

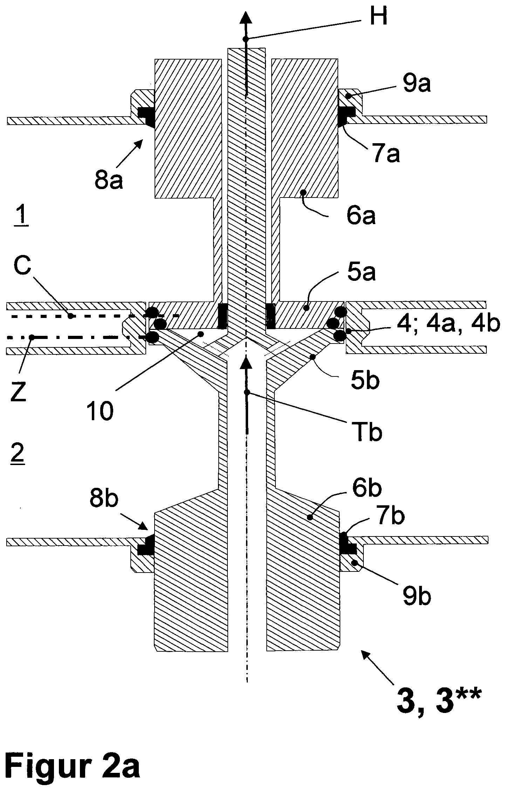

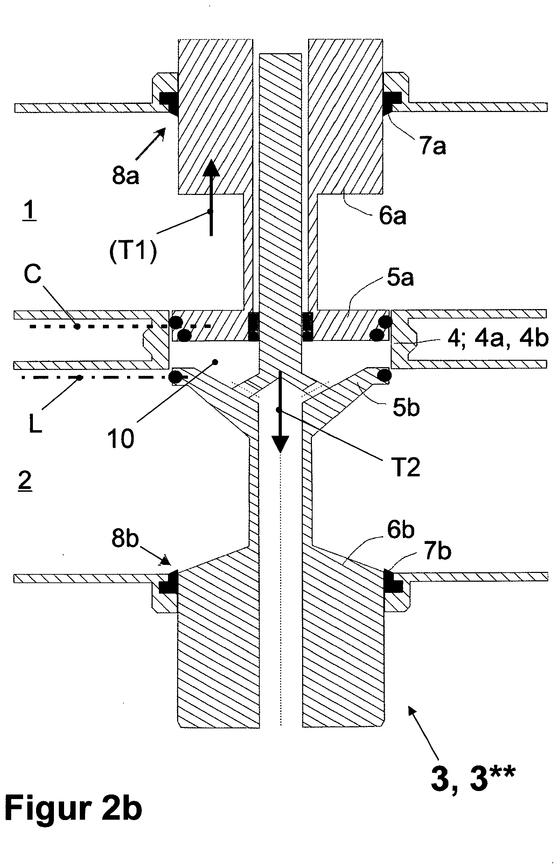

In **Figur 2** sind die Prozessleitungen 1, 2 über ein als Doppelsitzventil 3** ausgebildetes Ventil 3 miteinander verbunden. Das Doppelsitzventil 3** besitzt zwei unabhängig voneinander betätigbare Schließglieder 5a, 5b, die mit einem diesen gemeinsamen zylindrischen Ventilsitz 4 zusammenwirken und die in der dargestellten Schließstellung C das Überströmen von Fluiden von einem ersten Ventilgehäuseteil 9a in einen zweiten 9b oder umgekehrt verhindern, wobei sowohl in der Schließ- C als auch in einer nicht dargestellten, nach einem vollen Öffnungshub H nach oben vollzogenen vollen Offenstellung O zwischen den beiden Schließgliedern 5a, 5b ein Leckagehohlraum 10 eingeschlossen ist, der über wenigstens einen Verbindungsweg mit der Umgebung des Doppelsitzventils 3** verbunden ist.

Das erfindungsgemäße Verfahren kann für wenigstens ein Schließglied 5a, 5b oder beide Schließglieder 5a, 5b Anwendung finden. Die Bezugszeichen für das Doppelsitzventil 3** unterscheiden sich von jenen des Einsitzventils 3* darin, dass erstere einem Index a oder b zugeordnet sind, um die dem oberen, ersten 5a und unteren, zweiten Schließglied 5b zugeordneten Komponenten (erster Ventilsitz 4a, zweiter Ventilsitz 4b; erste Ventilstange 6a, zweite Ventilstange 6b; erste Ventilstangendichtung 7a, zweite Ventilstangendichtung 7b; erster ventilstangendichtungsnaher Bereich 8a, zweiter ventilstangendichtungsnaher Bereich 8b) zu kennzeichnen. Erste und zweite Teilhübe für die erfindungsgemäße Reinigung der Ventilstangen 6a, 6b sind mit Ta und Tb und erste und zweite Lifthübe für die Sitzreinigung der Schließglieder 5a, 5b sind mit T1 und T2 bezeichnet.

Es ist nicht zwingend, dass beide Schließglieder 5a, 5b mit einem ihnen gemeinsamen zylindrischen Ventilsitz 4 zusammenwirken, sondern jedem der Schließglieder 5a, 5b, die dann im Regelfall auf unterschiedlichen Durchmessern dichten, ist dann der zylindrische erste Ventilsitz 4a bzw. der zweite Ventilsitz 4b zugeordnet.

Das erfindungsgemäße Verfahren ist auch auf Doppelsitzventile anwendbar, wie sie aus der WO98/54 494A1 oder der WO2007/054 134A1 bekannt sind. Hier besitzt das obere Schließglied, bezogen auf die senkrechte Normallage, eine zylindrische Ausnehmung, in die das untere Schließglied im Zuge seiner Öffnungsbewegung hineingefahren wird, bevor das obere Schließglied öffnet. Dieser Umstand ist im Rahmen des erfindungsgemäßen Verfahrens vorteilhaft nutzbar, denn das untere, zweite Schließglied 5b kann ohne konstruktive Änderungen des Doppelsitzventils 3** um einen relativ großen zweiten Teilhub Tb verschoben werden, bis es seine Zwischenstellung Z erreicht, in der der zweite ventilstangendichtungsnahe Bereich 8b der zweiten Ventilstange 6b sich der Reinigungsflüssigkeit darbietet. Dadurch sind, bezogen auf die Schließstellung C des Doppelsitzventils 3**, relativ tief in der zweiten Ventilstangendichtung 7b liegende Bereiche der zugeordneten zweiten Ventilstange 6b reinigbar (s. hierzu auch Figur 2a).

Das Verfahren eignet sich auch für Doppelsitzventile 3**, in denen nur ein Schließglied 5a oder 5b mit einem radialen Dichtungsmittel, das mit einem zylindrischen Ventilsitz 4a oder 4b zusammenwirkt, ausgestattet ist. Das andere Schließglied 5b oder 5a ist in diesem Falle typischerweise mit einem axial oder kombiniert radial/axial wirkenden Dichtungsmittel ausgestattet und wirkt mit einem entsprechend orientierten weiteren Ventilsitz 4b oder 4a zusammen. Die letztgenannten beiden Ausführungsformen eines Doppelsitzventils 3** sind beispielsweise aus der WO98/054 494A1 bekannt.

Die Anwendung des erfindungsgemäßen Verfahrens in einem Doppelsitzventil 3** mit zwei radial dichtenden Schließgliedern 5a, 5b gemäß **Figur 2** ist in **Figur 2a** dargestellt. Hier ist für einen Reinigungsvorgang in der unteren Prozessleitung 2 das zweite Schließglied 5b mittels der zweiten Ventilstange 6b, die über die zweite Ventilstangendichtung 7b aus dem zweiten Ventilgehäuseteil 9b abgedichtet hindurchgeführt ist, zwecks einer Reinigung des zweiten ventilstangendichtungsnahen Bereichs 8b um den nach oben gerichteten zweiten Teilhub Tb in seine Zwischenstellung Z verschoben, während das erste Schließglied 5a in seiner regulären Schließstellung C verbleibt.

Bei einer Reinigung des ersten ventilstangendichtungsnahen Bereichs 8a wird das erste Schließglied 5a mittels der ersten Ventilstange 6a, die über die erste Ventilstangendichtung 7a aus dem ersten Ventilgehäuseteil 9a abgedichtet hindurchgeführt ist, um den nach unten gerichteten ersten Teilhub Ta (siehe hierzu auch Figur 2) in seine Zwischenposition Z verschoben, während das zweite Schließglied 5b nunmehr in seiner regulären Schließstellung C verbleibt.

Zweckmäßigerweise wird das erfindungsgemäße Verfahren mit einer Sitzreinigung der Schließglieder 5a, 5b verknüpft ("Liften"), wobei das Verfahren, zeitlich gesehen, jeweils vor dem Liften des jeweiligen Schließglieds 5a, 5b durchgeführt wird. Die Sitzreinigungsstellung des zweiten Schließglieds 5b, in der letzteres um den zweiten Teilhub T2 in eine Liftstellung L nach unten verschoben ist, ist in **Figur 2b** dargestellt. Bei einer Sitzreinigung des ersten Schließgliedes 5a wird letzteres durch den ersten Teilhub T1 nach oben verschoben (**Figuren 2b****,** **2**).

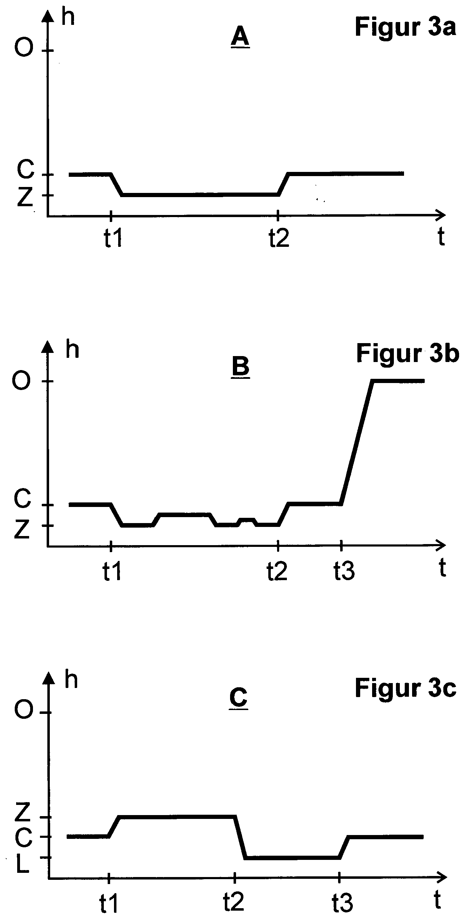

Die **Figuren 3a, 3b** und **3c** zeigen **Diagramme A, B** und **C,** in denen auf der Ordinate Betätigungswege bzw. Hubwege h des Schließgliedes 5, 5a, 5b und der zugeordneten Ventilstange 6, 6a, 6b für Ausführungsbeispiele des erfindungsgemäßen Verfahrens in Abhängigkeit von der Zeit t (Abszisse) dargestellt sind.

In **Diagramm A der** **Figur 3a** ist eine erste Ausführungsvariante des erfindungsgemäßen Verfahrens für ein Einsitzventil 3* gemäß **Figur 1** sowie für das erste Schließglied 5a des in Figur 2 dargestellten Doppelsitzventils 3** illustriert. Das Schließglied 5, 5a steht in seiner regulären Schließstellung C. Zu einem ersten Zeitpunkt t1 werden das Schließglied 5, 5a und die zugeordnete Ventilstange 6, 6a in eine Zwischenstellung Z gebracht. Zu einem zweiten Zeitpunkt t2 werden das Schließglied 5, 5a und die zugeordnete Ventilstange 6, 6a zurück in ihre reguläre Schließstellung C verschoben.

**Diagramm B** der **Figur 3b** zeigt eine zweite Ausführungsvariante, in der das Schließglied 5, 5a im Verlauf des erfindungsgemäßen Verfahrens, ausgehend von der Schließstellung C, innerhalb der Zeitspanne zwischen dem ersten und dem zweiten Zeitpunkt t1, t2 in eine Abfolge von mehreren, sich voneinander unterscheidenden Zwischenstellungen Z gebracht und anschließend zum dritten Zeitpunkt t3 in seine Offenstellung O überführt wird. Dabei können sich die Zwischenstellungen Z sowohl hinsichtlich ihres jeweiligen Teilhubs T, Ta als auch hinsichtlich ihrer jeweiligen zugeordneten Zeitspanne unterscheiden.

**Diagramm C** der **Figur 3c** zeigt eine Ausgestaltung eines Verfahrens, in dem das zweite Schließglied 5b eines Doppelsitzventils 3** gemäß Figur 2 zunächst das erfindungsgemäße Verfahren adäquat zur ersten Ausführungsvarianten gemäß **Diagramm A** der Figur 3a und anschließend ein an sich bekanntes Sitzreinigungsverfahren, ein sog. Lift-Verfahren, durchführt. Das zweite Schließglied 5b steht zu Beginn des Verfahrens in seiner regulären Schließstellung C, wie sie in Figur 2 dargestellt ist. Zum ersten Zeitpunkt t1 wird das zweite Schließglied 5b erfindungsgemäß in eine Zwischenstellung Z gebracht, wie sie in Figur 2a dargestellt ist, und bis zum zweiten Zeitpunkt t2 dort gehalten. Gleichzeitig läuft ein Reinigungsverfahren in der Prozessleitung 2 ab. In einem nächsten Schritt wird das zweite Schließglied 5b in eine Liftstellung L gemäß Figur 2b verschoben, in der der spaltweit freigelegte Ventilsitz 4b und das zugeordnete Dichtungsmittel gereinigt werden. Zu einem dritten Zeitpunkt t3 wird das zweite Schließglied 5b in seine Schließstellung C zurückgeführt (siehe Figur 2).

Zweckmäßigerweise werden in der Zeitspanne t1 bis t2 der ersten Ausführungsvariante gemäß **Diagramm A** der Figur 3a und der Ausführungsvariante gemäß **Diagramm C** der Figur 3c mehrere Zwischenstellungen Z angesteuert, ähnlich wie in **Diagramm B** der Figur 3b dargestellt. Periodische, sich einander ablösende Öffnungs- und Schließbewegungen zwischen der Schließ- C und der Zwischenstellung Z im Rahmen des erfindungsgemäßen Verfahrens und, wie üblich, in bekannten Liftverfahren nach der Lehre der DE40 35 017C1 bei gattungsbildenden Doppelsitzventilen können weiter zielführend sein, um einen weiter verbesserten Reinigungseffekt zu erzeugen.

Der Zeitraum t1 bis t2 kann, produktabhängig, unterschiedlich lang sein. Für leicht reinigbare Produkte kann z.B. das Schließglied 5, 5a, 5b nur während eines Spülvorgangs mit Wasser in der Zwischenstellung Z gehalten werden. Für schwer reinigbare Produkte können in dem Zeitraum t1 bis t2 z.B. Spülvorgänge in der Prozessleitung 1, 2 erst mit Wasser, dann mit nachfolgender Lauge oder Säure und anschließend wiederum mit Wasser durchgeführt werden. Gegebenenfalls werden gleiche Spülvorgänge bei der nachfolgenden Sitzreinigung wiederholt.

Der Fachmann wird das erfindungsgemäße Verfahren nicht nur auf solche Ventile 3, 3*, 3**, die in Brauereianlagen zur Anwendung kommen können, anwenden, sondern er wird es mit Erfolg auch in der Nahrungsmittel- und Getränkeindustrie im weitesten Sinne sowie in der Pharmazie, Biotechnologie und anderen prozesstechnischen Anlagen anwenden, wenn dort die vorstehend geschilderten Probleme auftreten.

### BEZUGSZEICHENLISTE DER VERWENDETEN ABKÜRZUNGEN

- 1: erste Prozessleitung
- 2: zweite Prozessleitung

- 3: Ventil, allgemein
- 3*: Einsitzventil
- 3**: Doppelsitzventil

- 4; 4a, 4b: Ventilsitz; erster, zweiter Ventilsitz
- 5; 5a, 5b: Schließglied; erstes, zweites Schließglied
- 6; 6a, 6b: Ventilstange; erste, zweite Ventilstange
- 7; 7a, 7b: Ventilstangendichtung; erste, zweite Ventilstangendichtung
- 8; 8a, 8b: ventilstangendichtungsnaher Bereich; erster, zweiter... Bereich
- 9, 9a, 9b: Ventilgehäuseteil; erster, zweiter Ventilgehäuseteil

- 10: Leckagehohlraum

- C: Schließstellung (des Schließgliedes)
- O: (volle) Offenstellung (des Schließgliedes)
- Z: Zwischenstellung (des Schließgliedes)

- H: (voller) Öffnungshub
- L: Liftstellung (des Schließgliedes)
- T, Ta, Tb: Teilhub; erster, zweiter Teilhub (Ventilstangenreinigung)
- T1: erster Lifthub (Sitzreinigung oben)
- T2: zweiter Lifthub (Sitzreinigung unten)

- h: Hub des Schließgliedes/Hubachse
- t: Zeit, allgemein/Zeitachse
- t1, t2, t3: diskrete Zeitpunkte; erster, zweiter, dritter Zeitpunkt

## Patentansprüche

1. Verfahren zur Reinigung eines Ventils (3; 3*, 3**), wobei im Verlauf eines Reinigungsvorganges wenigstens eine mit dem Ventil (3; 3*, 3**) fluidgängig verbundene Prozessleitung (1, 2) mit Reinigungsflüssigkeit durchströmt ist, wobei während des Reinigungsvorganges wenigstens ein Teil einer Ventilstange (6, 6a, 6b), der in einer Schließstellung (C) eines mit der Ventilstange (6; 6a, 6b) verbundenen Schließgliedes (5; 5a, 5b) mit einer Ventilstangendichtung (7; 7a, 7b) in dichtendem Kontakt steht, als ventilstangendichtungsnaher Bereich (8; 8a, 8b) aus dieser Schließstellung (C) heraus um einen Teilhub (T; Ta, Tb) einwärts in den Innenraum eines Ventilgehäuseteils (9; 9a, 9b) verschoben ist und das zugeordnete Schließglied (5; 5a, 5b) in mindestens eine Zwischenstellung (Z) bringt, in der die Abdichtung des Schließgliedes (5; 5a, 5b) in seinem Ventilsitz (4; 4a, 4b) erhalten bleibt,
**dadurch gekennzeichnet,**
**dass** in jeder Zwischenstellung (Z) die Abdichtung der Ventilstangendichtung (7; 7a, 7b) gegenüber der zugeordneten Ventilstange (6; 6a, 6b) erhalten bleibt.

2. Verfahren nach Anspruch 1,
**dadurch gekennzeichnet,**
**dass** die wenigstens eine Zwischenstellung (Z) über eine vorher festgelegte Zeitspanne gehalten wird.

3. Verfahren nach Anspruch 1 oder 2,
**dadurch gekennzeichnet,**
**dass** mehr als eine Zwischenstellung mittels des jeweils gleichen Teilhubs (T; Ta, Tb) vorgesehen ist, die in zeitlicher Abfolge aneinander gereiht sind.

4. Verfahren nach Anspruch 1 oder 2,
**dadurch gekennzeichnet,**
**dass** mehr als eine Zwischenstellung mittels des jeweils ungleichen Teilhubs (T; Ta, Tb) vorgesehen ist, die in zeitlicher Abfolge aneinander gereiht sind.

5. Verfahren nach einem der vorhergehenden Ansprüche,
**dadurch gekennzeichnet,**
**dass** periodisch sich ablösende Zwischen- (Z) und Schließstellungen (C) des Schließglieds (5; 5a, 5b) vorgesehen sind.

6. Verfahren nach einem der vorhergehenden Ansprüche,
**dadurch gekennzeichnet,**
**dass** ein Sitzreinigungsverfahren, bei dem ein Schließglied (5a, 5b) um einen Lifthub (T1, T2) spaltweit von seinem zugeordneten Ventilsitz (4; 4a, 4b) entfernt wird, oder eine Öffnungsbewegung um den vollen Öffnungshub (H), zeitlich gesehen, nachfolgend durchgeführt wird.

7. Verwendung eines Verfahrens nach einem der vorhergehenden Ansprüche zur Reduzierung der Abnutzung an der Ventilstangendichtung (7; 7a, 7b) des Ventils (3; 3*, 3**).

## Claims

1. A method for cleaning a valve (3; 3*, 3**), wherein, during the course of a cleaning operation, cleaning fluid flows through at least one process line (1, 2) which is connected by fluid passageways to the valve (3; 3*, 3**), wherein during the cleaning operation at least a part of a valve rod (6, 6a, 6b) which, in a closing position (C) of a closing element (5; 5a, 5b) which is connected to the valve rod (6; 6a, 6b), is in sealing contact with a valve rod seal (7; 7a, 7b), is displaced as a valve rod seal-proximate region (8; 8a, 8b) from said closing position (C) by a partial stroke (T; Ta, Tb) inwardly into the interior of a valve housing part (9; 9a, 9b) and brings the associated closing element (5; 5a, 5b) into at least one intermediate position (Z), in which the sealing of the closing element (5; 5a, 5b) is maintained in its valve seat (4; 4a, 4b),
**characterized in that**
in each intermediate position (Z), the sealing of the valve rod seal (7; 7a, 7b) is maintained relative to the associated valve rod (6; 6a, 6b).

2. The method according to Claim 1,
**characterized in that**
the at least one intermediate position (Z) is maintained over a previously determined period of time.

3. The method according to Claim 1 or 2,
**characterized in that**
more than one intermediate position is provided by means of the, in each case, equal partial stroke (T; Ta, Tb), which are lined up with each other in a time sequence.

4. The method according to Claim 1 or 2,
**characterized in that**
more than one intermediate position is provided by means of the, in each case, unequal partial stroke (T; Ta, Tb), which are lined up with each other in a time sequence.

5. The method according to any one of the preceding claims,
**characterized in that**
periodically alternating intermediate (Z) and closing positions (C) of the closing element (5; 5a, 5b) are provided.

6. The method according to any one of the preceding claims,
**characterized in that**
a seat cleaning method, during which a closing element (5a, 5b) is removed by a lift stroke (T1, T2) by a gap width from its associated valve seat (4; 4a, 4b), or an opening movement by the full opening stroke (H) is performed subsequently in time.

7. Use of a method according to any one of the preceding claims in order to reduce the wear on the valve rod seal (7; 7a, 7b) of the valve (3; 3*, 3**).

## Revendications

1. Procédé destiné au nettoyage d'une soupape (3 ; 3*, 3**), dans lequel, au cours d'une opération de nettoyage, au moins une conduite de traitement (1, 2) fluidiquement reliée à la soupape (3 ; 3*, 3**) est traversée par un liquide de nettoyage, dans lequel, pendant l'opération de nettoyage, au moins une partie d'une tige de soupape (6, 6a, 6b), laquelle est en contact étanche avec un joint d'étanchéité de tige de soupape (7 ; 7a, 7b) dans une position de fermeture (C) d'un organe de fermeture (5 ; 5a, 5b) relié à la tige de soupape (6 ; 6a, 6b), déplacée selon une course partielle (T ; Ta, Tb) hors de cette position de fermeture (C) vers l'intérieur dans l'espace intérieur d'une partie de boîtier de soupape (9 ; 9a, 9b) en tant que région proche du joint d'étanchéité de tige de soupape (8 ; 8a, 8b), et amène l'organe de fermeture (5 ; 5a, 5b) correspondant dans au moins une position intermédiaire (Z), dans laquelle l'étanchéité de l'organe de fermeture (5 ; 5a, 5b) est maintenue dans son siège de soupape (4 ; 4a, 4b),
**caractérisé en ce que**
dans chaque position intermédiaire (Z), l'étanchéité du joint d'étanchéité de tige de soupape (7 ; 7a, 7b) reste maintenue par rapport à la tige de soupape (6 ; 6a, 6b) correspondante.

2. Procédé selon la revendication 1,
**caractérisé en ce que**
l'au moins une position intermédiaire (Z) est maintenue sur une période prédéfinie.

3. Procédé selon la revendication 1 ou 2,
**caractérisé en ce que**
il est prévu plus d'une position intermédiaire au moyen de la course partielle (T ; Ta, Tb) respectivement identique, lesquelles sont arrangées les unes à la suite des autres dans un ordre chronologique.

4. Procédé selon la revendication 1 ou 2,
**caractérisé en ce que**
il est prévu plus d'une position intermédiaire au moyen de la course partielle (T ; Ta, Tb) respectivement différente, lesquelles sont arrangées les unes à la suite des autres dans un ordre chronologique.

5. Procédé selon l'une des revendications précédentes,
**caractérisé en ce que**
il est prévu des positions intermédiaires (Z) et des positions de fermeture (C) de l'organe de fermeture (5 ; 5a, 5b), lesquelles se succèdent périodiquement.

6. Procédé selon l'une des revendications précédentes,
**caractérisé en ce que**
un procédé de nettoyage de siège, dans lequel un organe de fermeture (5a, 5b) est éloigné de la largeur d'une fente selon une course de levée (T1, T2) par rapport à son siège de soupape (4 ; 4a, 4b) correspondant, ou un mouvement d'ouverture sur la course d'ouverture complète (H), est exécuté par la suite, dans un ordre chronologique.

7. Utilisation d'un procédé selon l'une des revendications précédentes, destinée à réduire l'usure sur le joint d'étanchéité de tige de soupape (7 ; 7a, 7b) de la soupape (3 ; 3*, 3**).
